Europäisches Patentamt

(19) European Patent Office

Office européen des brevets

(11) Publication number : **0 232 135 B1**

# (12) EUROPEAN PATENT SPECIFICATION

(45) Date of publication of patent specification :
28.03.90

(51) Int.-Cl.⁵ : **B 26 B 21/54, B 26 B 21/24, B 26 B 21/44**

(21) Application number : 87300792.6

(22) Date of filing : 29.01.87

(54) **Method of securing a shaving aid to a razor cartridge.**

(30) Priority : 31.01.86 US 824498

(43) Date of publication of application :
12.08.87 Bulletin 87/33

(45) Publication of the grant of the patent :
28.03.90 Bulletin 90/13

(84) Designated contracting states :
AT BE CH DE ES FR GB GR IT LI LU NL SE

(56) References cited :
EP-A- 0 184 440
GB-A- 2 024 082

(73) Proprietor : WARNER-LAMBERT COMPANY
201 Tabor Road
Morris Plains New Jersey 07950 (US)

(72) Inventor : Ferraro, Frank A.
104 Garwood Road
Trumbull Connecticut 06611 (US)

(74) Representative : Coxon, Philip et al
Eric Potter & Clarkson 14 Oxford Street
Nottingham NG1 5BP (GB)

## Description

The present invention relates to a method of securing a shaving aid to a razor head.

Razors to which this invention pertains may take the form of a single or twin bladed head where each blade is formed with a single cutting edge.

In general, wet shaving safety razors comprise a razor head secured to a handle. The head is usually secured to the handle by means of a track or a pivotal connection. Alternatively, the razor head is integrally moulded with the handle to form a unitary structure.

U.S. Patent No. 4 461 079 shows a typical track, U.S. Patent No. 4 428 116 shows a typical pivotal connection and U.S. Patent No. 4 425 705 shows an integrally attached handle to form a unitary structure.

Providing a shaving aid in the razor head is also known. U.S. Patent No. 4 170 821 discloses an elongate solid strip of water-soluble shaving aid material provided on the razor head.

One method of securing the shaving aid to the razor head has involved the use of adhesive. While this process is effective, it has certain drawbacks, such as the difficulty in controlling the application of proper amounts of adhesive in uniform fashion. In addition, the time required to set the adhesive and the pressure required to ensure good contact sometimes slow high-speed mass production operations.

One object of the present invention is to provide a method of securing a shaving aid permanently to a face-engaging surface of a razor head which is free of the problems associated with an adhesive process.

Another object of the invention is to provide a method of securing a shaving aid to a razor head which lends itself to modern high-speed mass production operations.

A further object of the present invention is to provide a manufacturing procedure which involves a minimum number of process steps where the steps are free of critical limitations.

According to this invention there is provided a method of securing a shaving aid to a razor head wherein the head is fabricated, at least in part, of a deformable material, comprising the steps of :

forming a shaving aid receiving formation in a face-engaging surface of the head ;

disposing the shaving aid in said formation ; and

thereafter deforming the head in the region of said shaving aid to an extent sufficient to retain said aid substantially permanently within said formation.

In one embodiment deformable members are provided along margins of said shaving aid receiving formation, and deforming said members in order to retain the shaving aid. Desirably a plurality of said deformable members are positioned at spaced intervals along said margins.

If desired, the deformation step may be carried out by peening.

The head may be formed integrally with a handle as a disposable razor or may be formed as a cartridge having means to attach it to a reusable handle.

According to another aspect of the invention there is provided a razor head for receiving a shaving aid comprising :

a shaving aid receiving formation provided in a face-engaging surface of the razor head, said formation being adapted to receive a shaving aid ; and

retaining means for retaining the shaving aid in said formation ;

wherein said retaining means is deformable between a first position in which it does not retain the shaving aid in said formation, and a second position in which it retains the shaving aid in said formation.

Preferably, the retaining means comprises deformable members provided along margins of the shaving aid receiving formation. If desired the deformable members may extend continuously along said margins.

However it is preferred that a plurality of said deformable members are provided at spaced intervals along said margins.

The razor head may be formed integrally with a handle as a disposable razor, or may be formed as a cartridge having means to attach it to a reusable handle.

Reference is now made to the accompanying drawings, in which :

Figure 1 is a perspective view of a portion of a razor head showing a strip of solid shaving aid before and after combination with a face-engaging surface of the head ; and

Figure 2 shows a forming tool for deforming or shaping the razor head to secure the shaving aid permanently to the head.

The reference numeral 10 designates a disposable razor head having a track 11 for making a releasable connection to a razor handle (not shown).

The head 10 includes a guard bar 12, twin blades 13 and 14 each having a cutting edge 16 and 17, respectively, separated in a known manner by a spacer 18.

The head 10 is fabricated of a deformable material which in the disclosed embodiment is a polymeric resin ; also the head 10 includes a cap 19 having a face-engaging surface 19a.

The face-engaging surface cap 19a is formed with a shaving aid receiving formation in the form of a recess 21 bounded by deformable members 22 and 23 ; the members 22 and 23 are shown both in full lines and in dotted lines, and this will be explained further hereinafter. The members 22 and 23 are in the form of fins extending substantially parallel to the longitudinal axis of the recess 21.

An elongate, solid shaving aid 24, shaped in general conformity with the recess 21, is received in the recess 21 while the members 22 and 23 are in the solid line position.

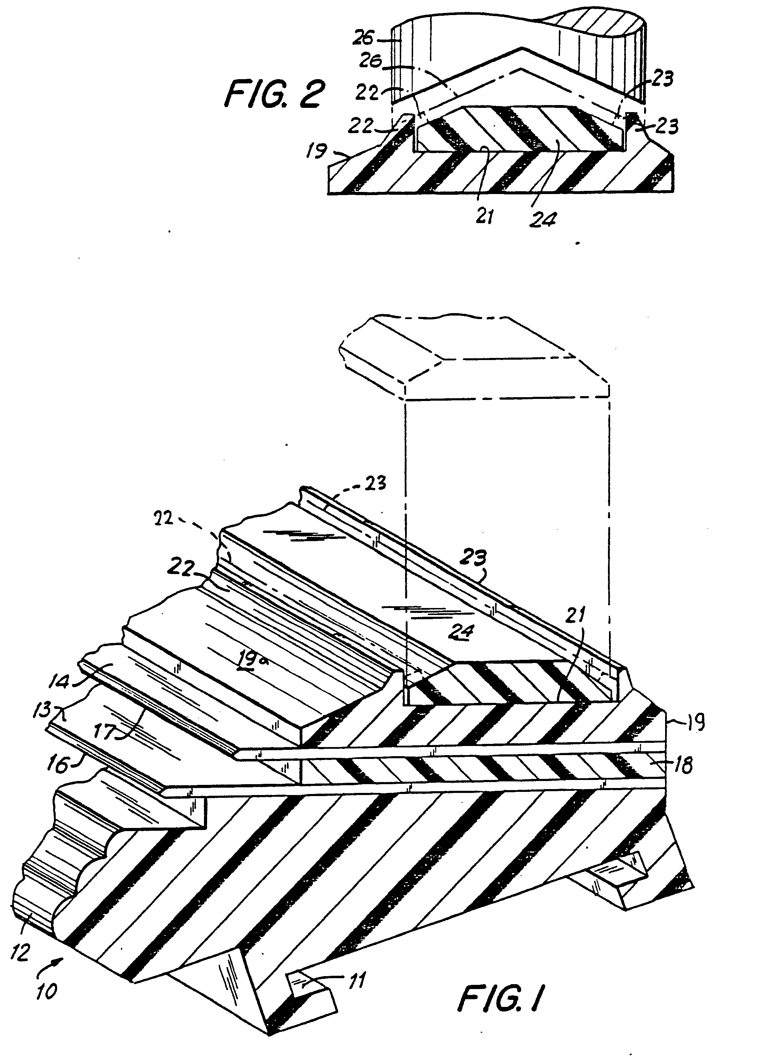

Thereafter the members 22 and 23 are deformed to the dotted line position by forming tool 26 (Figure 2). The members 22 and 23 are deformed so that they crimp the shaving aid 24 securely and permanently to the cap 19 of the head 10.

While the members 22 and 23 shown are continuous, it will be appreciated that they could be discontinuous; in this case spaced members 22 would be provided along one side of the recess 21, and spaced members 23 would be provided along the other side of the recess 21.

In addition, depending upon the deformation characteristics of the material from which the head 10 is fabricated, it is possible to do without the members 22 and 23 and effect the crimping step by peening or upsetting spaced points along the margin or border of the recess to move head material over portions of the strip to secure the strip to the head.

The forming tool 26 is shaped according to the crimping pattern desired.

The deformable material may be cold-worked or hot-worked depending upon the deformation characteristics of the material from which the head is fabricated.

The shaving aid comprises a structure which has at least one material which aids the process of shaving. The shaving aid may be selected from one or any combination of the following materials.

A) A material for reducing the frictional forces between the razor and the skin, e. g. a lubricant. Examples of lubricants include : micro-encapsulated silicone oil ; a polyethylene oxide in the range of molecular weights between 100,000 and 6,000,000 ; a non-ionic polyacrylamide ; and/or a natural polysaccharide derived from plant materials such as « guar gum ».

B) A material which modifies the chemical structure of the hair so that the razor blade can pass through the whiskers easily, e. g. a depilatory agent.

C) A cleaning material which allows the whisker and skin debris to be washed more easily from the razor parts during shaving, e. g. a silicone polyethylene oxide block copolymer and detergent such as sodium larnyl sulphate.

D) A medicinal agent for killing bacteria or repairing skin damage and abrasion.

E) A cosmetic material for softening, smoothing, conditioning or improving the skin.

F) A blood coagulant for the suppression of bleeding that occurs from nicks and cuts.

The shaving aid may include materials such as polystyrene, polyethylene, polypropylene or polyacetal.

As used herein the expression shaving aid may refer to a solid which is either partially water soluble or substantially entirely water soluble.

The shaving aid may comprise a solid microporous structure having a water soluble material incorporated therein, or a solid micro-encapsulating, water soluble, structure having a water soluble material incorporated therein.

The foregoing description relates to a razor head in the form of a cartridge for attachment to a razor handle. It will be appreciated that the head could be moulded integrally with the handle to form a disposable razor.

## Claims

1. A method of securing a shaving aid (24) to a razor head (10) wherein the head (10) is fabricated, at least in part, of a deformable material comprising the steps of :

forming a shaving aid receiving formation (21) in a face-engaging surface (19a) of the head (10) ;

disposing the shaving aid (24) in said formation ; and

thereafter deforming the head (10) in the region of said shaving aid (24) to an extent sufficient to retain said aid (24) substantially permanently within said formation (21).

2. A method according to Claim 1 further comprising deforming the head (10) at spaced intervals.

3. A method according to Claim 1 or 2 further comprising providing deformable members (22, 23) along margins of said shaving aid receiving formation (21), and deforming said members (22, 23) in order to retain the shaving aid (24).

4. A method according to Claim 3 further comprising positioning a plurality of said deformable members at spaced intervals along said margins.

5. A method according to Claim 1 wherein the deformation step is carried out by peening.

6. A razor head (10) for receiving a shaving aid (24) comprising :

a shaving aid receiving formation (21) provided in a face-engaging surface (19a) of the razor head (10) said formation (21) being adapted to receive the shaving aid (24) ; and

retaining means (22, 23) for retaining the shaving aid (24) in said formation (21) ;

wherein said retaining means (22, 23) is deformable between a first position in which it does not retain the shaving aid (24) in said formation (21), and a second position in which it retains the shaving aid (24) in said formation (21).

7. A razor head (10) according to Claim 6, in which the retaining means comprises deformable members (22, 23) provided along margins of the shaving aid receiving formation (21).

8. A razor head (10) according to Claim 6, in which a plurality of said deformable members are provided at spaced intervals along said margins.

## Patentansprüche

1. Verfahren zum Anbringen eines Rasierhilfsmittels (24) an einem Rasierapparat-Kopf (10), wobei der Kopf (10) zumindest zum Teil aus einem verformbaren Werkstoff hergestellt ist, umfassend die folgenden Schritte :

Ausbilden einer Rasierhilfsmittel-Aufnahmeausformung (21) in einer Gesichtsanlagefläche (19a) des Kopfes (10),

Einbringen des Rasierhilfsmittels (24) in die Ausformung und

anschließendes Verformen des Kopfes (10) im Bereich des Rasierhilfsmittels (24) in einem ausreichend großen Ausmaß, um das Rasierhilfsmittel (24) praktisch dauerhaft in der Ausformung (21) festzulegen.

2. Verfahren nach Anspruch 1, dadurch gekennzeichnet, daß der Kopf (10) an auf Abstände verteilten Stellen verformt wird.

3. Verfahren nach Anspruch 1 oder 2, dadurch gekennzeichnet, daß längs Rändern der Rasierhilfsmittel-Aufnahmeausformung (21) verformbare Elemente (22, 23) vorgesehen und diese Elemente (22, 23) zur Festlegung (oder Halterung) des Rasierhilfsmittels (24) verformt werden.

4. Verfahren nach Anspruch 3, dadurch gekennzeichnet, daß zahlreiche verformbare Elemente an auf Abstände verteilten Stellen längs der Ränder angeordnet werden.

5. Verfahren nach Anspruch 1, dadurch gekennzeichnet, daß der Verformungsschritt durch Stauchen oder Verstemmen durchgeführt wird.

6. Rasierapparat-Kopf (10) zur Aufnahme eines Rasierhilfsmittels (24), umfassend :

eine in einer Gesichtsanlagefläche (19a) des Rasierapparat-Kopfes (10) vorgesehene Rasierhilfsmittel-Aufnahmeausformung (21), welche das Rasierhilfsmittel (24) aufzunehmen vermag, und

eine Halteeinheit (22, 23) zum Festhalten des Rasierhilfsmittels (24) in der Ausformung (21),

wobei die Halteeinheit (22, 23) zwischen einer ersten Lage, in welcher sie das Rasierhilfsmittel (24) nicht in der Ausformung (21) festhält, und einer zweiten Lage verformbar ist, in welcher sie das Rasierhilfsmittel (24) in der Ausformung (21) festhält.

7. Rasierapparat-Kopf (10) nach Anspruch 6, dadurch gekennzeichnet, daß die Halteeinheit längs Rändern der Rasierhilfsmittel-Aufnahmeausformung (21) vorgesehene verformbare Elemente (22, 23) aufweist.

8. Rasierapparat-Kopf (10) nach Anspruch 6, dadurch gekennzeichnet, daß zahlreiche verformbare Elemente an auf Abstände verteilten Stellen längs der Ränder vorgesehen sind.

**Revendications**

1. Un procédé pour adapter ou fixer un adjuvant de rasage (24) sur une tête de rasage (10) dans lequel la tête (10) est formée, au moins en partie, d'un matériau déformable, ledit procédé comprenant les étapes suivantes :

formation d'une zone (21) de réception de l'adjuvant de rasage dans une surface (19a) de la tête, destinée à entrer au contact du visage ;

disposition de l'adjuvant de rasage (24) dans ladite zone ; et

déformation de la tête (10) au niveau où ledit adjuvant de rasage (24) a été adapté ou fixé de façon suffisante pour retenir ledit adjuvant de façon pratiquement permanente dans ladite zone.

2. Un procédé selon la revendication 1, comprenant en outre la déformation de la tête (10) en des points espacés.

3. Un procédé selon la revendication 1 ou 2, comprenant en outre la disposition d'éléments déformables (22, 23) sur les bords de ladite zone (21) de réception de l'adjuvant de rasage, et la déformation desdits éléments (22, 23) en vue de retenir l'adjuvant de rasage (24).

4. Un procédé selon la revendication 3 comprenant en outre le positionnement de plusieurs dits éléments déformables en des points espacés sur lesdits bords.

5. Un procédé selon la revendication 1 selon lequel l'étape de déformation est effectuée par martelage.

6. Une tête de rasage (10) destinée à recevoir un adjuvant de rasage (24) comprenant :

une zone (21) de réception de l'adjuvant de rasage aménagée sur une surface (19a) de la tête de rasage, destinée à entrer au contact avec le visage, ladite zone (21) étant susceptible de recevoir l'adjuvant de rasage (24) ; et

un moyen de rétention (22, 23) pour retenir l'adjuvant de rasage (24) dans ladite zone (21) ;

. dans ladite tête ledit moyen de rétention (22, 23) étant déformable entre une première position dans laquelle l'adjuvant de rasage (24) n'est pas retenu dans ladite zone (21) et une seconde position dans laquelle ledit adjuvant de rasage (24) est retenu dans ladite zone (21).

7. Une tête de rasage (10) selon la revendication 6, dans laquelle le moyen de rétention est formé d'éléments déformables (22, 23) disposés sur les bords de la zone (21) de réception d'adjuvant de rasage.

8. Une tête de rasage (10) selon la revendication 6, dans laquelle plusieurs desdits éléments déformables sont disposés en des points espacés le long desdits bords.

FIG. 2

FIG. 1